(19) **Europäisches Patentamt / European Patent Office / Office européen des brevets**

(11) **EP 4 386 034 A1**

(12) **EUROPEAN PATENT APPLICATION**
published in accordance with Art. 153(4) EPC

(43) Date of publication:
**19.06.2024 Bulletin 2024/25**

(21) Application number: **22855797.1**

(22) Date of filing: **27.07.2022**

(51) International Patent Classification (IPC):
**C08G 63/91** (2006.01)    **C08G 59/42** (2006.01)
**C08K 3/36** (2006.01)    **C08L 67/02** (2006.01)

(52) Cooperative Patent Classification (CPC):
**C08G 59/42; C08G 63/91; C08K 3/36; C08L 67/02;**
Y02W 30/62

(86) International application number:
**PCT/JP2022/028973**

(87) International publication number:
**WO 2023/017734 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.08.2021 JP 2021131627**

(71) Applicants:
• **Nagoya Institute Of Technology
Nagoya-shi, Aichi 466-8555 (JP)**
• **TOYOBO CO., LTD.
Osaka-shi, Osaka 530-0001 (JP)**

(72) Inventors:
• **HAYASHI, Mikihiro
Nagoya-shi, Aichi 466-8555 (JP)**
• **KIMURA, Takahiro
Nagoya-shi, Aichi 466-8555 (JP)**
• **UCHIYAMA, Shoko
Otsu-shi, Shiga 520-0292 (JP)**

(74) Representative: **Müller-Boré & Partner
Patentanwälte PartG mbB
Friedenheimer Brücke 21
80639 München (DE)**

(54) **CROSSLINKED POLYESTER RESIN**

(57)    An object is to provide a crosslinked polyester resin that has covalent bond exchange properties at a temperature of 150°C or higher and is even more effective for upcycling.

A crosslinked polyester resin in which a polyester unit is crosslinked with a compound having two or more epoxy groups has covalent bond exchange properties at a temperature of 150°C or higher and having a gel fraction of 80% by mass or higher.

[FIG. 4]

## Description

### TECHNICAL FIELD

The present invention relates to a resin in which a polyester unit is crosslinked with a compound having two or more epoxy groups (hereinafter, sometimes referred to as crosslinked polyester resin).

### BACKGROUND ART

Covalently crosslinked polymer elastomers cannot be remolded or recycled under normal circumstances. This is due to the irreversibility of covalent crosslinking points. In response to this problem, bond exchange-type dynamically covalently crosslinkable resins have recently attracted attention. As a bond exchange-type dynamically covalently crosslinkable resin, research results have been reported on the preparation of a polyester-based bond exchange-type crosslinkable resin from a linear general-purpose polyester [e.g., polybutylene terephthalate (PBT) or polyethylene terephthalate (PET)] and a polyfunctional alcohol using a transesterification reaction (Non-Patent Documents 1 and 2).

### RELATED ART DOCUMENTS

### NON-PATENT DOCUMENTS

Non-Patent Document 1 : Yanwu Zhou,et al., Macromolecules. 2017, 50(17), 6742-6751.
Non-Patent Document 2 : Jianfan Qiu,et al., Macromolecules. 2021, 54(2), 703-712.

### DISCLOSURE OF THE INVENTION

### PROBLEMS TO BE SOLVED BY THE INVENTION

The gel fraction of a crosslinking reaction product of a general-purpose polyester having no crosslinkable functional group on a side chain is limited to about 70%, and the remaining of about 30% is a sol component (uncrosslinked chains) that is not connected to a network structure. When the gel fraction is increased, the amount of the uncrosslinked component is reduced, which is considered to allow upcycling of the crosslinkable resin.

The gel fraction of the bond exchange-type crosslinkable resin described in the Non-Patent Document 1 is 71 to 72%, the gel fraction of the bond exchange-type crosslinkable resin described in the Non-Patent Document 2 is 74.6%, and these gel fractions are slightly higher than the gel fraction of the crosslinking reaction product of the general-purpose polyester having no crosslinkable functional group on a side chain. However, even the bond exchange-type crosslinkable resins have a gel fraction of up to about 75%. It is desirable to further improve the gel fraction to obtain a bond exchange-type resin that is more effective for upcycling.

An object of the present invention is to provide a crosslinked polyester resin that has covalent bond exchange properties at a temperature of 150°C or higher and is even more effective for upcycling.

### SOLUTIONS TO THE PROBLEMS

The configuration according to the present invention that has solved the above problems is as follows.

[1] A crosslinked polyester resin in which a polyester unit is crosslinked with a compound having two or more epoxy groups has covalent bond exchange properties at a temperature of 150°C or higher and has a gel fraction of 80% by mass or higher.
[2] The crosslinked polyester resin according to [1] contains silica particles.
[3] The polyester unit of the crosslinked polyester resin according to [1] or [2] is a polycondensate of a polyvalent carboxylic acid component (A) and a polyhydric alcohol component (B), and the polyvalent carboxylic acid component (A) comprises terephthalic acid and the polyhydric alcohol component (B) comprises an alkanediol having 2 to 4 carbon atoms.
[4] The polyvalent carboxylic acid component (A) of the crosslinked polyester resin according to [3] further comprises a saturated aliphatic dicarboxylic acid having 5 to 20 carbon atoms.
[5] The polyhydric alcohol component (B) of the crosslinked polyester resin according to [3] or [4] further comprises at least one selected from the group consisting of neopentyl glycol, cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol.
[6] The crosslinked polyester resin according to any one of [1] to [5] contains a transesterification catalyst.
[7] The crosslinked polyester resin according to any one of [1] to [6] has a Young's modulus of 50 MPa or higher, and the Young's modulus is calculated from a gradient of a stress-strain curve at 2% elongation.
[8] The crosslinked polyester resin according to any one of [1] to [7] has a tensile strength of 10 MPa or higher.

### EFFECTS OF THE INVENTION

According to the present invention, it is possible to obtain a crosslinked polyester resin that has covalent bond exchange properties at a temperature of 150°C or higher and has a gel fraction of 80% by mass or higher, and thus is even more effective for upcycling.

BRIEF DESCRIPTION OF THE DRAWING

[FIG. 1] FIG. 1 shows a photograph of Sample 1 obtained in Example 1 taken with a field emission scanning electron microscope.
[FIG. 2] FIG. 2 shows a photograph of Sample 4 obtained in Example 3 taken with a field emission scanning electron microscope.
[FIG. 3] FIG. 3 shows the measured heat flow rate.
[FIG. 4] FIG. 4 shows the temperature dependence of the storage elastic modulus (E') and the loss tangent tan$\delta$, and FIG. 4 (a) shows the results for samples 1 and 2, and FIG. 4 (b) shows the result for sample 3.
[FIG. 5] FIG. 5 shows the temperature dependence of the storage elastic modulus (E') and the loss tangent tan$\delta$, with results for sample 1 and sample 4.
[FIG. 6] FIG. 6 shows stress-strain curves for Samples 1 to 3.
[FIG. 7] FIG. 7 shows a stress-strain curve for Sample 4.
[FIG. 8] FIG. 8 shows the temperature dependence of the stress relaxation curves, and FIG. 8 (a) shows the stress relaxation curve of sample 1, and FIG. 8 (b) shows the stress relaxation curves of samples 1 and 2.
[FIG. 9] FIG. 9 shows the temperature dependence of the stress relaxation curves of sample 4.

MODE FOR CARRYING OUT THE INVENTION

The crosslinked polyester resin of the present invention is a resin in which a polyester unit is crosslinked with a compound having two or more epoxy groups. And the crosslinked polyester resin has covalent bond exchange properties at a temperature of 150°C or higher and has a gel fraction of 80% by mass or higher. Since the gel fraction is high, the crosslinked polyester resin of the present invention is more useful for upcycling.

1. Polyester Unit

The polyester unit is a post-crosslinking unit derived from a polyester resin used as a raw material before crosslinking (hereinafter, sometimes referred to as "pre-crosslinking polyester resin"). And the pre-crosslinking polyester resin may either be an aliphatic polyester or an aromatic polyester. By using an aromatic polyester, heat resistance can be increased. An aliphatic polyester and an aromatic polyester may be used in combination.
The pre-crosslinking polyester resin is a polycondensate of a polyvalent carboxylic acid component (A) and a polyhydric alcohol component (B).
Examples of the polyvalent carboxylic acid component (A) include dicarboxylic acids and tetracarboxylic acids, and dicarboxylic acids are preferable. As the polyvalent carboxylic acid component (A), one or more of these acids can be used.
Examples of the dicarboxylic acid include: aromatic dicarboxylic acids such as phthalic acid, isophthalic acid, terephthalic acid, phenylene dicarboxylic acid, and 2,6-naphthalene dicarboxylic acid; aliphatic dicarboxylic acids such as succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid (octadecanedioic acid), octadecane dicarboxylic acid (eicosanedioic acid), and dimeric acid; alicyclic dicarboxylic acids such as 1,4-cyclohexane dicarboxylic acid, tetrahydrophthalic acid, hexahydroisophthalic acid, and 1,2-cyclohexene dicarboxylic acid; unsaturated group-containing dicarboxylic acids such as a terpene-maleic acid adduct; etc. Among dicarboxylic acids, aromatic dicarboxylic acids and aliphatic dicarboxylic acids are preferred. One or more of these dicarboxylic acids can be used.
Examples of the tricarboxylic acid include: aliphatic tricarboxylic acids such as 1,3,5-pentane tricarboxylic acid; alicyclic tricarboxylic acids such as 1,3,5-cyclohexane tricarboxylic acid; aromatic tricarboxylic acids such as trimellitic acid and trimesic acid; etc. These tricarboxylic acids may be acid anhydrides. One or more of these tricarboxylic acids can be used.
Examples of tetracarboxylic acids include 1,2,4,5-benzene tetracarboxylic acid, 3,3',4,4'-benzophenone tetracarboxylic acid, etc. These tetracarboxylic acids may be acid anhydrides. One or more of these tetracarboxylic acids can be used.
Examples of the polyhydric alcohol component (B) include monomeric diol. Examples of the monomeric diol include: aliphatic diols such as ethylene glycol, 1,2-propylene glycol, 1,3-propanediol, 2-methyl-1,3-propanediol, 2,2-dimethyl-1,3-propanediol (sometimes referred to as neopentyl glycol), 2,2-diethyl-1,3-propanediol, 2-n-butyl-2-ethyl-1,3-propanediol, 2,2-isopropyl-1,3-propanediol, 2,2-di-n-butyl-1,3-propanediol, 1,2-butanediol, 1,3-butanediol, 1,4-butanediol, 1,3-pentanediol, 1,4-pentanediol, 1,5-pentanediol, 3-methyl-1,5-pentanediol, 2,4-diethyl-1,5-pentanediol, 1,2-hexanediol, 1,6-hexanediol, 3-methyl-1,6-hexanediol, 4-methyl-1,7-heptanediol, 2-methyl-1,8-octanediol, 3-methyl-1,8-octanediol, 4-methyl-1,8-octanediol, 4-propyl-1,8-octanediol, and 1,9-nonanediol; alicyclic polyols such as 1,4-cyclohexanediol, 1,2-cyclohexanedimethanol, 1,3-cyclohexanedimethanol, 1,4-cyclohexanedimethanol, tricyclodecane glycols, and hydrogenated bisphenols; aromatic diols such as bisphenol A, etc. As the monomeric diol, an aliphatic diol is preferable.
The polyhydric alcohol component (B) may be a polyether polyol (polyether glycol) such as polyether glycols including diethylene glycol, triethylene glycol, polyethylene glycol, dipropylene glycol, tripropylene glycol, polypropylene glycol, polyolefin glycol, polytetramethylene glycol, etc.

The polyhydric alcohol component (B) may be a polyester polyol (preferably an aromatic polyester diol) such as glycol-modified products of aromatic dicarboxylic acids including ethylene glycol-modified products of terephthalic acid (e.g., bis-2-hydroxyethyl terephthalate (BHET)), propylene glycol-modified products of terephthalic acid, ethylene glycol-modified products of isophthalic acid, propylene glycol-modified products of isophthalic acid, ethylene glycol-modified products of orthophthalic acid, propylene glycol-modified products of orthophthalic acid, etc.

As the polyhydric alcohol component (B), one or more of these compounds can be used.

As the polyhydric alcohol component (B), at least one polyol selected from monomeric polyols (especially aliphatic diols) and polyester polyols (especially aromatic polyester diols) is preferably contained, and an embodiment in which at least a monomeric polyol (especially aliphatic diol) is contained is more preferable.

The polyester unit is preferably composed of terephthalic acid as the polyvalent carboxylic acid component (A) and an alkanediol having 2 to 4 carbon atoms as the polyhydric alcohol component (B).

Terephthalic acid only has to be a main component of the polyvalent carboxylic acid component (A), and when the total amount of the polyvalent carboxylic acid component (A) is 100 mol%, the amount of terephthalic acid is, for example, 50 mol% or more, preferably 70 mol% or more, and more preferably 80 mol% or more.

Examples of the alkanediol having 2 to 4 carbon atoms include: ethylene glycol, 1,2-propylene glycol, 1,3-propanediol, 2-methyl-1,3-propanediol, 1,2-butanediol, 1,3-butanediol, 1,4-butanediol, etc. One or more of these alkanediols can be used. Among these alkanediols, ethylene glycol is preferred.

The alkanediol having 2 to 4 carbon atoms only has to be a main component of the polyhydric alcohol component (B), and when the total amount of the polyhydric alcohol component (B) is 100 mol%, the amount of the alkanediol having 2 to 4 carbon atoms is, for example, 50 mol% or more, preferably 70 mol% or more, and more preferably 80 mol% or more.

In the case where the polyester unit includes terephthalic acid as the polyvalent carboxylic acid component (A) and the alkanediol having 2 to 4 carbon atoms as the polyhydric alcohol component (B), the polyvalent carboxylic acid component (A) preferably further includes a saturated aliphatic dicarboxylic acid having 5 to 20 carbon atoms.

Examples of the saturated aliphatic dicarboxylic acid having 5 to 20 carbon atoms include: glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid (octadecanedioic acid), octadecane dicarboxylic acid (eicosanedioic acid), etc.

When the total amount of the polyvalent carboxylic acid component (A) is 100 mol%, the amount of the saturated aliphatic dicarboxylic acid having 5 to 20 carbon atoms is, for example, preferably 5 mol% or more and preferably 50 mol% or less.

In the case where the polyester unit includes terephthalic acid as the polyvalent carboxylic acid component (A) and the alkanediol having 2 to 4 carbon atoms as the polyhydric alcohol component (B), the polyhydric alcohol component (B) preferably further includes at least one selected from the group consisting of neopentyl glycol, cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol. When the total amount of the polyhydric alcohol component (B) is 100 mol%, the amount of the neopentyl glycol, cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol is, for example, preferably 5 mol% or more and preferably 50 mol% or less.

The pre-crosslinking polyester resin is preferably amorphous. Amorphous means that no exothermic peak due to crystallization or no endothermic peak due to melting can be observed with a differential scanning calorimeter (DSC).

The pre-crosslinking polyester resin has a number-average molecular weight (Mn) of, for example, 4000 to 90000. When the number-average molecular weight of the pre-crosslinking polyester resin is not lower than 4000, heat resistance can be improved. The number-average molecular weight is more preferably not lower than 4200 and further preferably not lower than 10000. However, when the number-average molecular weight of the pre-crosslinking polyester resin having a carboxy group on a side chain is excessively high, the pre-crosslinking polyester resin becomes excessively hard, resulting in becoming brittle. Therefore, the number-average molecular weight is preferably not higher than 90000, more preferably not higher than 60000, and further preferably not higher than 40000.

2. Epoxy-Based Crosslinking Agent

In the crosslinked polyester resin, the polyester unit is crosslinked with a compound having two or more epoxy groups (hereinafter, sometimes referred to as epoxy-based crosslinking agent). It is inferred that the carboxy groups at the carboxylic acid terminals of two or more polyester units (including the carboxylic acid terminals of polyester units that have been hydrolyzed to a small molecular weight) react with the two or more epoxy groups of the epoxy-based crosslinking agent, respectively, to form covalent bonds (ester bonds), thereby forming a crosslinked structure. By crosslinking the polyester unit with the compound having two or more epoxy groups, a crosslinked polyester resin that has covalent bond exchange properties at a temperature of 150°C or higher and has a gel fraction of 80% by mass or higher, can be obtained. A hydroxyl group (X) generated by the reaction of the terminal carboxylic acid of the polyester unit with an epoxy group and a terminal carboxylic acid (Y) of the polyester unit may form a covalent bond (X + Y, ester bond), thereby introducing a crosslinked structure.

The epoxy-based crosslinking agent is not particularly limited as long as the epoxy-based crosslinking agent has two or more epoxy groups in the molecule, and examples of the epoxy-based crosslinking agent include diol diglycidyl ethers, glycidyl ethers of alcohols having three or more hydroxyl groups, epoxy resins, epoxy amine compounds having two or more epoxy groups and two or more tertiary amino groups in the molecule, compounds including two or more epoxy groups and one tertiary amino group in the molecule, etc. As the epoxy-based crosslinking agent, one or more of these agents can be used. The epoxy-based crosslinking agent preferably includes an epoxy amine compound having two or more epoxy groups and two or more tertiary amino groups in a molecule or a compound having two or more epoxy groups and one tertiary amino group in a molecule, and more preferably includes an epoxy amine compound having two or more epoxy groups and two or more tertiary amino groups in a molecule.

Examples of diol diglycidyl ethers include compounds in which a glycidyl group is ether-linked to the hydroxyl group of the diol exemplified as the polyhydric alcohol component (B). As diol diglycidyl ethers, aliphatic diol diglycidyl ethers such as ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, 1,4-butanediol diglycidyl ether, 1,5-pentanediol diglycidyl ether, neopentyl glycol diglycidyl ether, 1,6-hexanediol diglycidyl ether, and hydrogenated bisphenol A diglycidyl ether, and aromatic diol diglycidyl ethers such as bisphenol A diglycidyl ether, etc., are preferable. Among these diol diglycidyl ethers, aliphatic diol diglycidyl ethers are more preferable. As a compound in which a diglycidyl group is ether-linked to the hydroxyl group of the diol listed as polyhydric alcohol component (B), one or more of these compounds can be used.

Examples of glycidyl ethers of alcohols having three or more hydroxyl groups include polyglycidyl ethers (preferably diglycidyl ethers) of aliphatic polyols such as glycerin diglycidyl ether, glycerin triglycidyl ether, trimethylol propane diglycidyl ether, and trimethylol propane triglycidyl ether. One or more of these glycidyl ethers of alcohols having three or more hydroxyl groups can be used.

Examples of epoxy resins include cresol novolac-type epoxy resins, phenolic novolac-type epoxy resins, epoxy resins having a dicyclopentadiene skeleton, etc. One or more of these epoxy resins can be used.

As a commercially available product of cresol novolac-type epoxy resins, for example, YDCN-700 manufactured by DIC Corporation, etc., can be used. As a commercially available product of phenolic novolac-type epoxy resins, for example, EPICLON N-700A manufactured by DIC Corporation, etc., can be used. As a commercially available product of epoxy resins having a dicyclopentadiene skeleton, HP7200 series manufactured by DIC Corporation can be used.

Examples of epoxy amine compounds having two or more epoxy groups and two or more tertiary amino groups in the molecule include compounds having two diglycidylamino groups and a benzene ring such as N,N,N',N'-tetraglycidyl-m-xylenediamine and 4,4'-methylenebis(N,N-diglycidylaniline), etc.

N,N,N',N'-tetraglycidyl-m-xylenediamine is commercially available from MITSUBISHI GAS CHEMICAL COMPANY, INC., as a multifunctional epoxy compound "TETRAD-X". 4,4'-methylenebis(N,N-diglycidylaniline) is available from Tokyo Chemical Industry Co., Ltd. (TCI).

Examples of compounds including two or more epoxy groups and one tertiary amino group in the molecule include compounds having one diglycidylamino group, a glycidyloxy group, and a benzene ring, such as triglycidyl para-aminophenol (also called N,N-diglycidyl-4-(glycidyloxy)aniline).

As a commercially available product of triglycidyl para-aminophenol, for example, jER630 manufactured by Mitsubishi Chemical Corporation, etc., can be used.

The amount of the epoxy-based crosslinking agent per 100 parts by mass of the pre-crosslinking polyester resin is, for example, preferably 3 parts by mass or more and 30 parts by mass or less, more preferably 5 parts by mass or more, further preferably 8 parts by mass or more, more preferably 25 parts by mass or less, further preferably 20 parts by mass or less.

3. Covalent Bond Exchange Properties

The crosslinked polyester resin has covalent bond exchange properties at a temperature of 150°C or higher. By having covalent bond exchange properties, the crosslinked polyester resin can be remolded or recycled by heat pressing, despite the fact that the crosslinked polyester resin is a crosslinked resin. Having covalent bond exchange properties means satisfying the following two requirements.

1) Stress relaxation occurs when a stress relaxation test is performed at a temperature of 150°C or higher.
2) In a temperature range where the stress relaxation test is performed, a rubbery flat region where a loss elastic modulus (E") is significantly lower than a storage elastic modulus (E') is observed. The rubbery flat region means that a region where the loss elastic modulus (E") is 90% or lower of the storage elastic modulus (E') lasts continuously at 100°C or higher.

As for the above 1), the occurrence of stress relaxation means a phenomenon in which $\sigma/\sigma_0$ is 0.7 or lower within $1\times10^4$ seconds when the stress relaxation test is performed, and the temperature at which the stress relaxation test is performed is defined as the starting temperature of stress relaxation. In the stress relaxation, preferably, $\sigma/\sigma_0$ is 0.7 or lower within $5\times10^3$ seconds. $\sigma_0$ indicates the initial stress, and $\sigma$ indicates the stress. The stress relaxation test is preferably performed in an inert atmosphere (e.g., $N_2$ gas atmosphere) with shear strain in a linear region and with a vertical stress of 10 N applied.

4. Gel Fraction

The crosslinked polyester resin has a gel fraction of 80% by mass or higher. Since the gel fraction is high and the amount of an uncrosslinked component is small, it is easier to upcycle the crosslinked polyester resin. For the gel fraction, a sample is immersed in a solvent that exhibits high solubility for the pre-crosslinking polyester resin, and the extracted sol solution and the remaining gel component are individually dried, and the gel fraction is a value $f_{gel}$ calculated based on the following equation with the mass of the sample remaining after drying the sol solution as $w_{sol}$ and the mass of the sample remaining after drying the gel component as $w_{gel}$. The gel fraction of the crosslinked polyester resin is preferably 85% by mass or higher and more preferably 90% by mass or higher.

$$f_{gel} = w_{gel}/(w_{gel}+w_{sol})\times100$$

5. Silica Particles

The crosslinked polyester resin preferably contains silica particles. By containing silica particles, the strength (Young's modulus) of the crosslinked polyester resin is improved. In addition, the heat resistance is also improved. It is inferred that this improvement is due to the inherent high elasticity of the silica particles and the formation of an adsorption phase between the silica particles and the polymer.

The silica particles may be surface functionalized particles which are surface-modified, or surface non-functionalized particles which are not surface-modified.

As for the size of the silica particles, for example, the diameter thereof is preferably 5 nm or larger and 20 nm or smaller, is more preferably 7 nm or larger and further preferably 10 nm or larger, and is more preferably 18 nm or smaller and further preferably 16 nm or smaller.

The amount of the silica particles per 100 parts by mass of the pre-crosslinking polyester resin is, for example, preferably 5 parts by mass or more and 35 parts by mass or less, more preferably 10 parts by mass or more, further preferably 15 parts by mass or more, more preferably 30 parts by mass or less, further preferably 25 parts by mass or less.

6. Transesterification Catalyst

The crosslinked polyester resin preferably contains a transesterification catalyst. By containing a transesterification catalyst, a transesterification reaction can proceed together with an epoxy ring-opening reaction, thereby promoting crosslinking between the polyester unit and the epoxy-based crosslinking agent.

Examples of the transesterification catalyst include: metal-containing catalysts such as titanium compounds (tetra-n-butyl titanate, tetraisopropyl titanate, titanium oxyacetylacetonate, etc.), antimony compounds (tributoxy anthimony, antimony trioxide, etc.), germanium compounds (tetra-n-butoxy germanium, germanium oxide, etc.), scandium compounds (scandium triflate, etc.), zinc compounds (zinc acetate, zinc octylate, etc.), and aluminum compounds (aluminum acetate, aluminum acetylacetate, etc.); amines such as trimethylamine, triethylamine, benzyldimethylamine, diazabicycloundecene (DBU), 1,5,7-triazabicyclo[4.4.0]deca-5-ene (TBD), 1,4-diazabicyclo[2.2.2]octane (DABCO), and 1,5-diazabicyclo[4.3.0]nonene (DBN); quaternary ammonium salts such as tetramethyl ammonium chloride and triethyl benzyl ammonium chloride; imidazoles such as 2-ethyl 4-imidazole; amides; pyridines such as 4-dimethylaminopyridine; phosphines such as triphenylphosphine; phosphonium salts such as tetraphenylphosphonium bromide; etc. One of these transesterification catalysts may be used, or two or more of these transesterification catalysts may be used. Among them, metal-containing catalysts or amines are preferable, a scandium compound or a zinc compound is more preferable as a metal-containing catalyst, and diazabicycloundecene (DBU), 1,4-diazabicyclo[2.2.2]octane (DABCO), or 1,5-diazabicyclo[4.3.0]nonene (DBN) is more preferable as an amine.

The amount of the transesterification catalysts per 100 parts by mass of the pre-crosslinking polyester resin is, for example, preferably 1 parts by mass or more and 20 parts by mass or less, more preferably 1.3 parts by mass or more, further preferably 1.5 parts by mass or more, more preferably 15 parts by mass or less, further preferably 10 parts by mass or less.

7. Crosslinked Polyester Resin

The crosslinked polyester resin preferably has a Young's modulus (measurement temperature: room temperature, e.g., 25°C) of 50 MPa or higher, the Young's modulus being calculated from the gradient of a stress-strain curve at 2% elongation. The Young's modulus is more preferably 70 MPa or higher and further preferably 80 MPa or higher.

The crosslinked polyester resin preferably has a tensile strength of 10 MPa or higher. The tensile strength is more preferably 15 MPa or higher and further preferably 20 MPa or higher.

The crosslinked polyester resin has a glass transition temperature (Tg) of preferably 0°C or higher (more preferably 10°C or higher) and 25°C or lower.

The crosslinked polyester resin preferably has remoldability at a temperature of 200°C. Remoldability refers to the property that after the crosslinked polyester resin is heated and held at 200°C in a state of being deformed into a predetermined shape, the crosslinked polyester resin retains the predetermined shape even when allowed to cool to room temperature. The retention of the predetermined shape is considered to be attributed to ester exchange occurring due to the heating, resulting in remolding. The remolded product retains the predetermined shape even when cooled.

The crosslinked polyester resin preferably has degradability for triethylene glycol. Degradability refers to the property that the crosslinked polyester resin is dissolved when immersed in triethylene glycol and heated and held at a temperature of 200°C for 20 hours, and, preferably, the crosslinked polyester resin is dissolved when heated and held at a temperature of 180°C for 10 hours. Heating causes decrosslinking via a bond exchange reaction between triethylene glycol and the crosslinked polyester resin, making the crosslinked polyester resin soluble in triethylene glycol. By having degradability, it is made possible to isolate and recycle the components of the crosslinked polyester resin.

The crosslinked polyester resin preferably has a peak of temperature change of a loss tangent $\tan\delta$ (sometimes referred to as $\alpha$ relaxation peak) in a range of 30°C or higher. The higher the temperature of the $\alpha$ relaxation peak is, the higher the heat resistance is. The temperature of the $\alpha$ relaxation peak is more preferably in a range of 35°C or higher and further preferably in a range of 40°C or higher. The upper limit of the temperature of the $\alpha$ relaxation peak is not particularly limited, but is, for example, 100°C or lower. The temperature change of the loss tangent $\tan\delta$ is a value obtained by performing temperature-dispersion viscoelasticity measurement in an $N_2$ gas atmosphere with a measurement frequency of 1 Hz and a strain of 0.05%.

The crosslinked polyester resin can be used, for example, as a molding material.

8. Production Method for Crosslinked Polyester Resin

The crosslinked polyester resin can be produced by known methods. For example, the above pre-crosslinking polyester resin, the above epoxy-based crosslinking agent, and the above transesterification catalyst are dissolved in a solvent, then are vacuum dried to remove the solvent, and are heated to cause crosslinking. The silica particles are preferably added at an appropriate stage before crosslinking, for example, before or after the polyester resin is dissolved in the solvent.

Examples of the solvent include: aromatic hydrocarbons such as toluene; ketones such as methyl ethyl ketone and cyclohexanone; nitrogen-containing solvents such as dimethylacetamide, dimethylformamide, and N-methyl pyrrolidone; ethers such as tetrahydrofuran (THF), 1,4-dioxane, 1,3-dioxane, and 1,3-dioxolane; etc. Among them, ethers are preferable.

As the pre-crosslinking polyester resin, a commercially available product may be used, or the pre-crosslinking polyester resin may be produced by performing polycondensation of the polyvalent carboxylic acid component (A) and the polyhydric alcohol component (B) by a known method. For the polycondensation reaction, a solvent may be used or may not necessarily be used. For the polycondensation reaction, a known catalyst such as the above-described transesterification catalyst may be used.

The present application claims priority based on Japanese Patent Application No. 2021-131627 filed on August 12, 2021. All the contents described in Japanese Patent Application No. 2021-131627 are incorporated herein by reference.

EXAMPLES

Hereinafter, the present invention will be more specifically described by means of examples. However, the present invention is not limited by the following examples and can also be carried out with modifications being made within the scope of the gist described above and below, and each of these modifications are included in the technical scope of the present invention.

(Example 1)

A crosslinked polyester resin was produced using a pre-crosslinking polyester resin, an epoxy-based crosslinking agent, silica particles, and a transesterification catalyst.

As the pre-crosslinking polyester resin (glass transition temperature Tg = 13.6°C; number average molecular weight Mn = 23,000; polyvalent carboxylic acid component (A): 70 mol% of terephthalic acid and 30 mol% of sebacic acid; polyhydric alcohol component (B): 58 mol% of ethylene glycol and 42 mol% of neopentyl glycol), a linear amorphous polyester resin having no crosslinkable functional group on a side chain was used. The pre-crosslinking polyester resin showed no exothermic peak due to crystallization and no endothermic peak due to melting with a differential scanning calorimeter (DSC), thereby confirming that the pre-crosslinking polyester resin was amorphous. The amount of terephthalic acid was 70 mol% when the total amount of the polyvalent carboxylic acid component (A) was 100 mol%. The amount of sebacic acid was 30 mol% when the total amount of the polyvalent carboxylic acid component (A) was 100 mol%. The amount of ethylene glycol was 58 mol% when the total amount of the polyhydric alcohol component (B) was 100 mol%. The amount of neopentyl glycol was 42 mol% when the total amount of the polyhydric alcohol component (B) was 100 mol%.

As the epoxy-based crosslinking agent, 4,4'-methylenebis(N,N-diglycidylaniline) (hereinafter, sometimes referred to as 4-Epoxy) was used. 4,4'-methylenebis(N,N-diglycidylaniline) is a tetrafunctional epoxy compound. 4-Epoxy was blended at 10% on a mass basis with respect to the pre-crosslinking polyester resin.

As the silica particles, silica particles manufactured by Nissan Chemical Corporation were used. The used silica particles were surface non-functionalized and had a diameter of 12 nm. The silica particles were blended at 20% on a mass basis with respect to the pre-crosslinking polyester resin.

As the transesterification catalyst, diazabicycloundecene (DBU) was used. DBU was blended at 2% on a mass basis with respect to the pre-crosslinking polyester resin.

The pre-crosslinking polyester resin, 4-Epoxy, the silica particles, and DBU were uniformly mixed by a solvent casting method using tetrahydrofuran (THF). After vacuum drying, a crosslinking reaction was carried out by heating at 200°C for 24 hours, to produce a sample. The obtained sample is defined as Sample 1. In this reaction, a network is considered to be formed by a transesterification reaction and an epoxy ring-opening reaction between the pre-crosslinking polyester resin and 4-Epoxy.

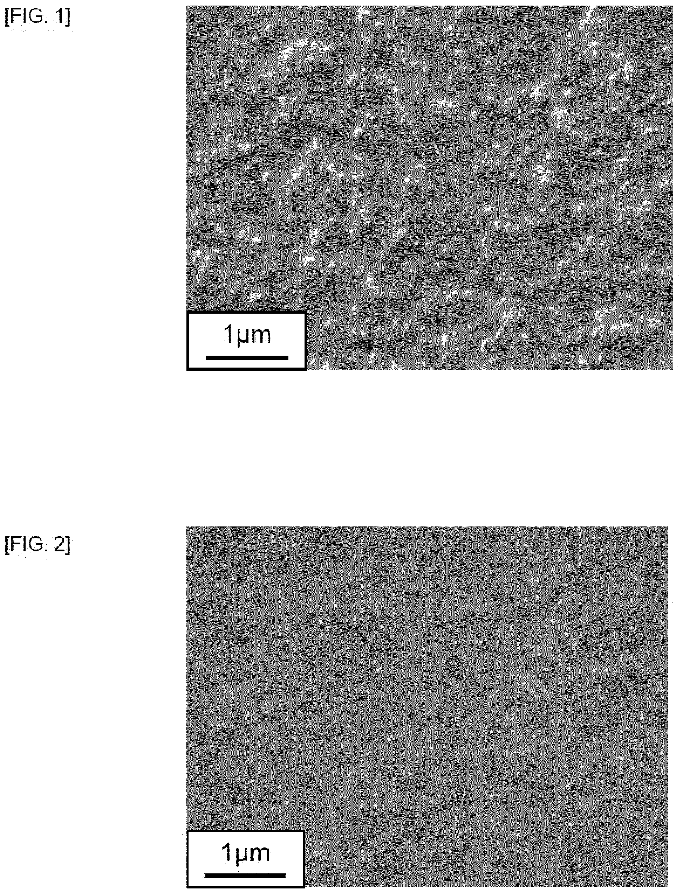

For Sample 1, FIG. 1 shows a photograph taken when the dispersion state of the silica particles was observed with a field emission scanning electron microscope (JSM-7800F, manufactured by JEOL Ltd.). The acceleration voltage was 5.0 keV, and the observation magnification was 20,000 times. The observation was made with platinum-palladium deposited on the surface. As is obvious from FIG. 1, there were no macroscopic aggregates of the silica particles, and Sample 1 was highly transparent.

(Example 2)

A sample was produced under the same conditions as in Example 1, except that the silica particles were not blended in Example 1. The obtained sample is defined as Sample 2. In this reaction, a network is considered to be formed by a transesterification reaction and an epoxy ring-opening reaction between the pre-crosslinking polyester resin and 4-Epoxy.

(Comparative Example 1)

The pre-crosslinking polyester resin used in Example 1 was used as Sample 3 as it was.

(Example 3)

A sample was produced under the same conditions as in Example 1, except that surface functionalized silica particles were used instead of the surface non-functionalized silica particles in Example 1. In Example 3, surface hydroxyl functionalized silica particles manufactured by Nissan Chemical Corporation were used. The diameter of the silica particles was 12 nm. The silica particles were blended at 10% on a mass basis with respect to the pre-crosslinking polyester resin. The obtained sample is defined as Sample 4. In Example 3, a network is considered to be formed by a transesterification reaction and an epoxy ring-opening reaction between the pre-crosslinking polyester resin and 4-Epoxy.

For Sample 4, FIG. 2 shows a photograph taken when the dispersion state of the silica particles was observed under the same conditions as in Example 1. As is obvious from FIG. 2, there were no macroscopic aggregates of the silica particles as in Sample 1 (Example 1).

For Samples 1 to 4, the number average molecular weight (Mn) was determined as follows.

(Number-Average Molecular Weight (Mn))

Samples 1 to 4 were dissolved in DMF such that the concentration thereof was about 0.5% by mass, and was filtered through a polytetrafluoroethylene membrane filter having a pore diameter of 0.5 $\mu$m to obtain a filtrate as a measurement sample. The number-average molecular weight (Mn) was measured by gel permeation chromatography using DMF containing LiBr (0.05% bay mass) as a mobile phase and a differential refractometer as a detector. The flow rate was set to 0.5 mL/min, and the column temperature was set to 40°C. The columns used were KF-803, KF-804L, and KF-805L manufactured by Showa Denko K.K. Monodisperse polymethyl methacrylate was used as a standard substance (molecular weight standard). Low molecular weight compounds (oligomers, etc.) having a number-average molecular weight less than 1000 were not counted and were omitted.

For Samples 1 to 4, the gel fraction was measured. The gel fraction was measured by a swelling test. 0.1 g of each sample was immersed in tetrahydrofuran (THF), and after 24 hours, the extracted sol solution was transferred to another sample bottle. The remaining gel component was again immersed in THF, and the same operation was performed a total of three times. A gel fraction $f_{gel}$ was calculated based on the following equation with the mass of the sample remaining after drying the sol solution as $w_{sol}$ and the mass of the sample remaining after drying the gel component as $w_{gel}$. As a result, the gel fraction of Sample 1 was 94.4% by mass, the gel fraction of Sample 2 was 95.5% by mass, the gel fraction of Sample 3 was 0% by mass (all dissolved), and the gel fraction of Sample 4 was 95.3% by mass.

$$f_{gel} = w_{gel}/(w_{gel}+w_{sol}) \times 100$$

(1) Glass Transition Temperature (Tg)

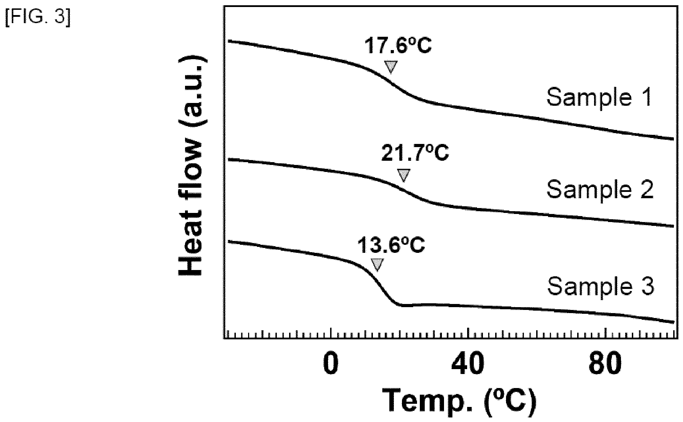

The glass transition temperatures (Tg) of samples 1 to 3 were measured. The glass transition temperature (Tg) was determined using DSC7020 (manufactured by HITACHI High-Tech) by measuring a heat flow rate in the range of -50°C to 200°C at a temperature change rate of 10°C/min in an $N_2$ gas atmosphere. FIG. 3 shows the results of the DSC measurements. The vertical axis indicates a heat flow rate, and the horizontal axis indicates the temperature (°C). The Tg of Sample 1 was 17.6°C, the Tg of Sample 2 was 21.7°C, and the Tg of Sample 3 was 13.6°C. The fact that the temperatures of Samples 1 and 2 were higher than that of Sample 3 is considered to be attributed to the fact that molecular motion is constrained by the formation of a crosslinked structure.

(2) Temperature-Dispersion Viscoelasticity

Temperature-dispersion viscoelasticity was measured in a temperature decrease mode in the temperature range from 190°C to -50°C using DMS6100 (manufactured by HITACHI High-Tech). The measurement was performed at a temperature change rate of 3°C/min in an $N_2$ gas atmosphere. The measurement frequency was 1 Hz and the strain was 0.05%. The measurement sample used had a strip with a thickness of 1 mm and a width of 4 mm.

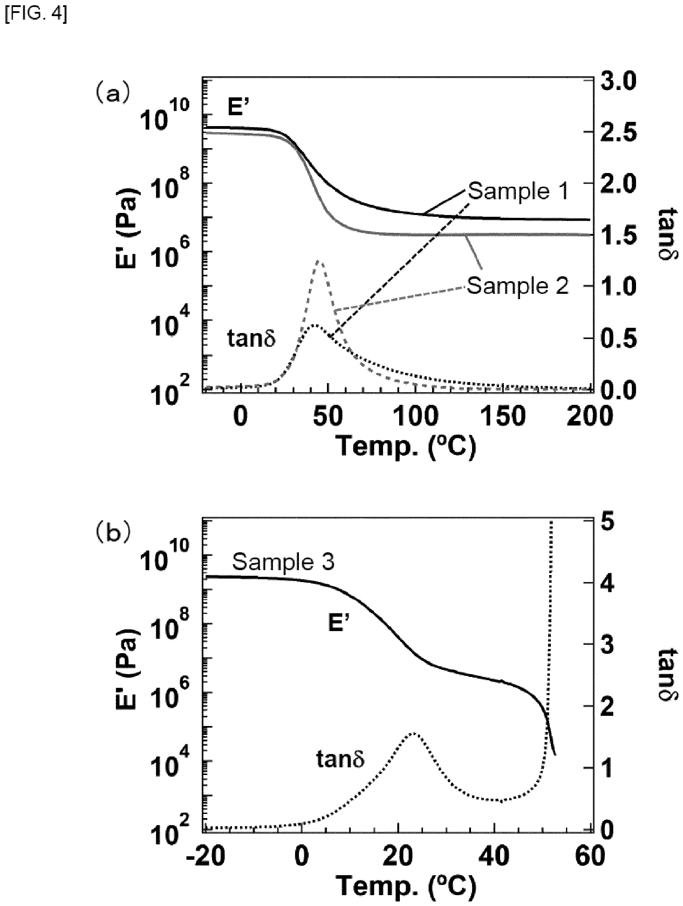

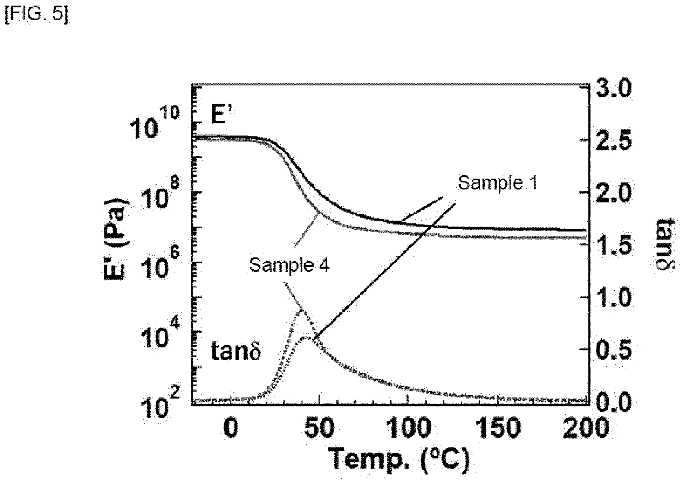

FIG. 4(a) shows the temperature dependence of the storage elastic modulus (E') and the loss tangent tanδ in Samples 1 and 2 obtained in Examples 1 and 2, FIG. 4(b) shows the temperature dependence of the storage elastic modulus (E') and the loss tangent tanδ in Sample 3 obtained in Comparative Example 1, and FIG. 5 shows the temperature dependence of the storage elastic modulus (E') and the loss tangent tanδ in Sample 4 obtained in Example 3. FIG. 5 also shows the data for Sample 1 obtained in Example 1 as a comparison. In FIG. 4(a) and (b) and FIG. 5, the vertical axis indicates the storage elastic modulus E' (Pa), and the horizontal axis indicates the temperature (°C).

In FIG. 4(a) and (b) and FIG. 5, a solid line indicates the temperature dependence of the storage elastic modulus (E'), and a dashed line indicates the temperature dependence of the loss tangent tanδ. In Samples 1 and 2, a tanδ peak (α relaxation peak) derived from segmental relaxation is seen in a region of about 40 to 50°C, and in Sample 3, an α relaxation peak is seen at about 25°C. At a lower temperature side of this peak region, each sample is in a glass state, and on the higher temperature side of this peak region, each sample is in a rubber state. In Sample 3, a rubbery flat region is not observed, and the storage elastic modulus (E') at 40°C or higher decreases significantly with increasing temperature. This is typical behavior of amorphous uncrosslinked polymers. On the other hand, in Samples 1 and 2, a rubbery flat region was observed, and a rapid decrease in the storage elastic modulus (E') (plateau elastic modulus) was not seen. This indicates that a crosslinked network is formed and the crosslink density remains unchanged even at high temperatures. In Sample 4, as in Sample 1, a tanδ peak (α relaxation peak) derived from segmental relaxation is seen in a region of about 40 to 50°C. The storage elastic modulus (E') of Sample 4 was lower than the storage elastic modulus (E') of Sample 1. This is considered to be attributed to the difference in silica particle content, and is considered to be attributed to the fact that the content of the silica particles in Sample 1 is 20% and the content of the silica particles in Sample 4 is 10%. In Sample 4 as well, as in Sample 1, a stable rubbery flat region lasted to high temperatures, and a rapid decrease in the storage elastic modulus (E') (plateau elastic modulus) was not seen. This indicates that a crosslinked network is formed and the crosslink density remains unchanged even at high temperatures. From these results, it was found that a stable crosslinked network is formed in this design regardless of the surface functional group of the silica particles.

The value of the storage elastic modulus (E') in the rubbery flat region was 9.1 MPa for Sample 1, 3.1 MPa for Sample 2, 2.5 MPa for Sample 3, and 5.4 MPa for Sample 4. Comparing the storage elastic moduli (E') of Sample 1 and Sample 2, an approximately 3-fold increase in filler effect by blending the silica particles was seen.

(3) Tensile Test

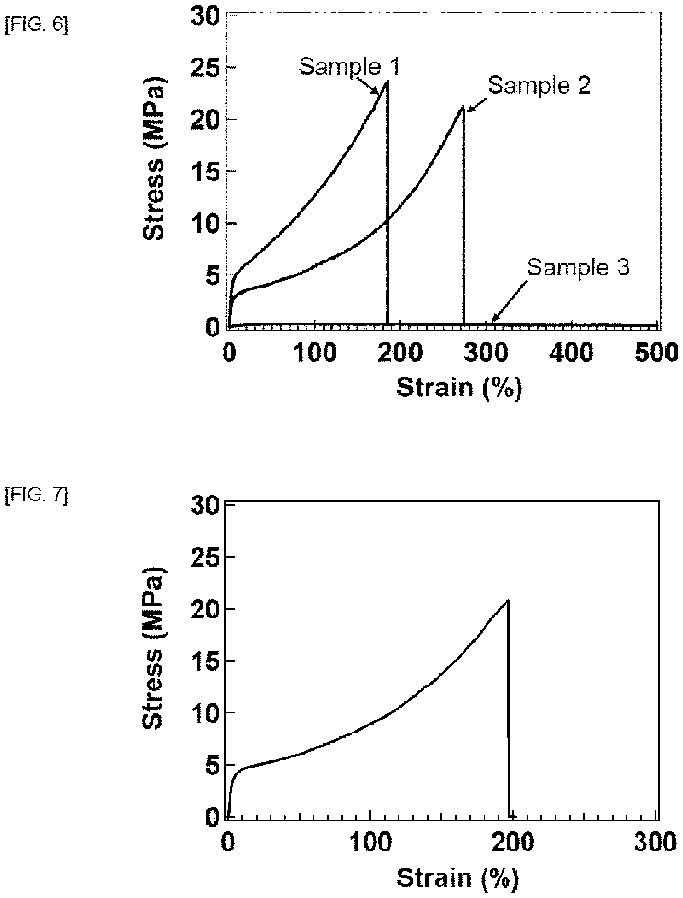

A tensile test was performed at room temperature using AGS-500NX (manufactured by SHIMADZU CORPORATION). The tensile test speed was 10 mm/min. The sample used was a dumbbell test piece with a thickness of 1 mm, a gauge width of 4 mm, and a gauge length of 13 mm. The tensile strength was 23.4 MPa for Sample 1, 21.0 MPa for Sample 2, 0.28 MPa for Sample 3, and 20.8 MPa for Sample 4. FIG. 6 shows stress-strain curves for Samples 1 to 3, and FIG. 7 shows a stress-strain curve for Sample 4. The vertical axis indicates the stress (MPa), and the horizontal axis indicates the strain (%). As is obvious from FIG. 6, Sample 3 was capable of high elongation, but the stress was significantly lower. That is, the behavior of Sample 3 was viscous. Samples 1 and 2 showed a significant increase in the storage elastic modulus (E') over Sample 3.

The Young's modulus estimated from the gradient of 2% strain was 150 MPa for Sample 1, 91 MPa for Sample 2, 1.75 MPa for Sample 3, and 144 MPa for Sample 4. The difference in Young's modulus between Sample 1 and Sample 2 is considered to be attributed to an effect of the addition of the silica particles. In addition, the maximum stress was the highest for Sample 1 in which the silica particles were added, thereby confirming the strength improvement due to the inclusion of the silica particles.

(4) Stress Relaxation Test

A stress relaxation test was performed at a temperature of 100°C, 180°C, 190°C, or 200°C for samples 1 to 3 and at a temperature of 100°C, 170°C, 180°C, or 190°C for sample 4 using MCR302 (manufactured by Anton Paar). A disk-shaped test piece having a diameter of 8 mm and a thickness of 0.5 mm was used for the test, and the test was performed in an $N_2$ gas atmosphere with a shear strain of 3% in a linear region and with a vertical stress of 10 N applied.

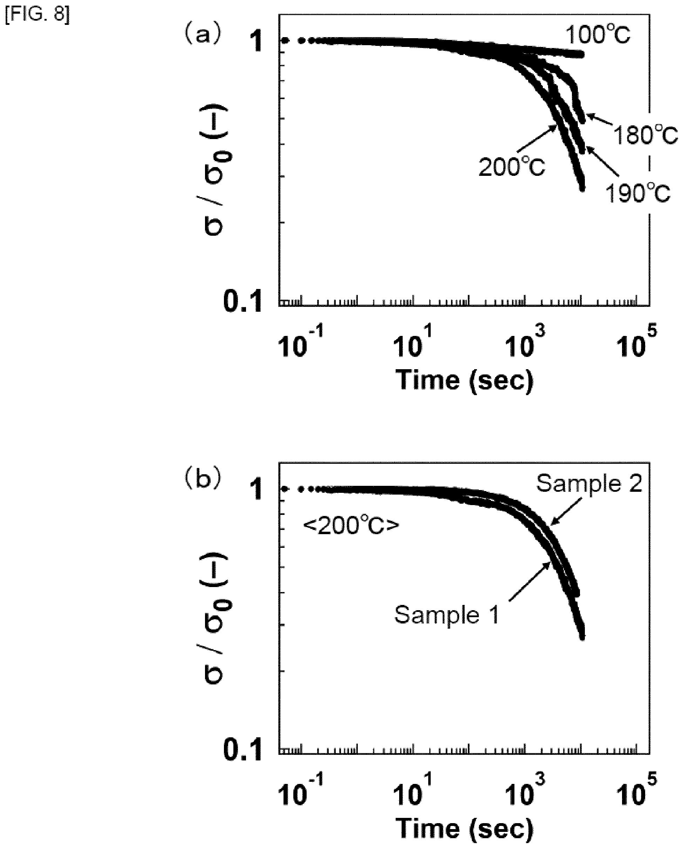

FIG. 8(a) shows the results of stress relaxation measurement for Sample 1. The vertical axis indicates the stress ($\sigma$) normalized by the initial stress ($\sigma_0$), and the horizontal axis indicates the elapsed time (seconds). As is obvious from FIG. 8(a), no significant stress relaxation was seen at a measurement temperature of 100°C, whereas significant stress relaxation was seen at high temperatures of 180°C or higher. This is considered to be attributed to the fact that a transesterification reaction proceeded at high temperatures, resulting in the development of stress dispersion. In addition, it is found that when the measurement temperature was further increased from 180°C, the stress relaxation rate increased with increasing temperature. This is considered to be attributed to the fact that the transesterification reaction was activated by temperature.

FIG. 8(b) shows the results of the stress relaxation test at a temperature of 200°C for Sample 1 and Sample 2. As is obvious from FIG. 8(b), it was found that the presence or absence of the silica particles did not have a significant effect on the stress relaxation behavior.

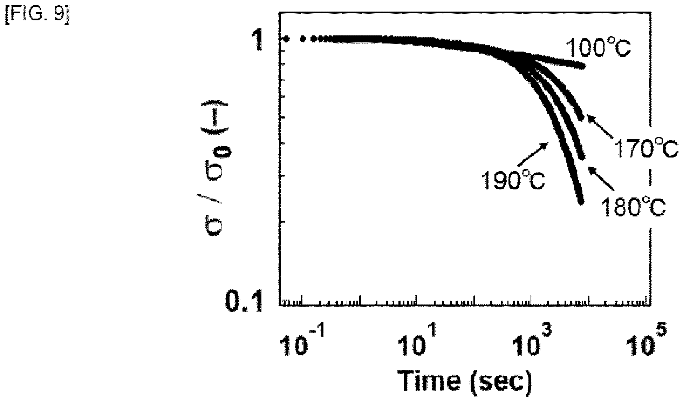

FIG. 9 shows the results of stress relaxation measurement for Sample 4. As is obvious from FIG. 9, no significant stress relaxation was seen at a measurement temperature of 100°C, whereas significant stress relaxation was seen at high temperatures of 170°C or higher. This is considered to be attributed to the fact that a transesterification reaction proceeded at high temperatures, resulting in the development of stress dispersion. In addition, it is found that when the measurement temperature was further increased from 170°C, the stress relaxation rate increased with increasing temperature. This is considered to be attributed to the fact that the transesterification reaction was activated by temperature. From these results, it was found that bond exchange in the crosslinked network is activated regardless of the surface functional group of silica.

(5) Remolding Processability

The remolding processability of Sample 1 was evaluated by the following procedure. A strip of Sample 1 (30 mm long, 4 mm wide, 0.3 mm thick) was wound around the outer surface of a glass bottle having a diameter of 0.8 mm, and both ends of the wound Sample 1 were fixed to the glass bottle using tape. In a state where Sample 1 was fixed to the outer surface of the glass bottle, Sample 1 was kept at a temperature of 200°C for 20 hours and then allowed to cool to room temperature. After cooling, Sample 1 was removed from the outer surface of the glass bottle. As a result, Sample 1 retained its curved shape and exhibited remolding processability. On the other hand, a general crosslinked sample does not exhibit this property and returns to its original shape before being wound when removed from the outer surface of the glass bottle. The development of remolding processability in this system is considered to be attributed to the loss of elasticity during the rearrangement of a network due to the progress of a transesterification reaction.

(6) Degradability

The degradability of Sample 1 was evaluated by the following procedure. Sample 1 (5 mm long, 5 mm wide, 0.3 mm thick) was immersed in 30 mL of triethylene glycol, and heated and held at a temperature of 180°C using a reflux device. As a result, Sample 1 began to dissolve after 1 hour, and was almost entirely dissolved after 10 hours. This decomposition is considered to be attributed to the exchange between the hydroxyl groups of the alcohol solvent and the ester bonds in Sample 1 under heating.

INDUSTRIAL APPLICABILITY

The crosslinked polyester resin of the present invention can be applied to resin materials, film materials, elastomer materials, gel materials, etc., that are composed of polymers.

**Claims**

1. A crosslinked polyester resin in which a polyester unit is crosslinked with a compound having two or more epoxy groups, the crosslinked polyester resin having covalent bond exchange properties at a temperature of 150°C or higher and having a gel fraction of 80% by mass or higher.

2. The crosslinked polyester resin according to claim 1, containing silica particles.

3. The crosslinked polyester resin according to claim 1 or 2, wherein the polyester unit is a polycondensate of a polyvalent carboxylic acid component (A) and a polyhydric alcohol component (B), wherein the polyvalent carboxylic acid component (A) comprises terephthalic acid and the polyhydric alcohol component (B) comprises an alkanediol having 2 to 4 carbon atoms.

4. The crosslinked polyester resin according to claim 3, wherein the polyvalent carboxylic acid component (A) further comprises a saturated aliphatic dicarboxylic acid having 5 to 20 carbon atoms.

5. The crosslinked polyester resin according to claim 3, wherein the polyhydric alcohol component (B) further comprises at least one selected from the group consisting of neopentyl glycol, cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol.

6. The crosslinked polyester resin according to claim 1, containing a transesterification catalyst.

7. The crosslinked polyester resin according to claim 1, having a Young's modulus of 50 MPa or higher, the Young's modulus being calculated from a gradient of a stress-strain curve at 2% elongation.

8. The crosslinked polyester resin according to claim 1, having a tensile strength of 10 MPa or higher.

[FIG. 1]

1μm

[FIG. 2]

1μm

[FIG. 3]

[FIG. 4]

[FIG. 5]

[FIG. 6]

[FIG. 7]

[FIG. 8]

[FIG. 9]

## INTERNATIONAL SEARCH REPORT

| International application No. |
| --- |
| **PCT/JP2022/028973** |

**A. CLASSIFICATION OF SUBJECT MATTER**

*C08G 63/91*(2006.01)i; *C08G 59/42*(2006.01)i; *C08K 3/36*(2006.01)i; *C08L 67/02*(2006.01)i
FI:  C08G63/91; C08G59/42; C08L67/02; C08K3/36

According to International Patent Classification (IPC) or to both national classification and IPC

**B. FIELDS SEARCHED**

Minimum documentation searched (classification system followed by classification symbols)

C08G63/91; C08G59/42; C08K3/36; C08L67/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | HAYASHI, Mikihiro, Dominant Factor of Bond-Exchange Rate for Catalyst-Free Polyester Vitrimers with Internal Tertiary Amine Moieties, ACS APPLIED POLYMER MATERIALS, 2020, vol. 2, pp. 5365-5370, in particular, p. 5366, right column, lines 15-18, p. 5367, right column, lines 14-5 from the bottom, fig. 1, 4 | 1, 3-8 |
| | in particular, p. 5366, right column, lines 15-18, p. 5367, right column, lines 14-5 from the bottom, fig. 1, 4 | |
| A | | 2 |
| A | JP 2003-327846 A (TOYOBO CO., LTD., NIPPON STEEL CORP.) 19 November 2003 (2003-11-19) | 1-8 |
| A | JP 2014-513192 A (ARKEMA FRANCE CENTRE NATIONAL DE LA RECHERCHE SCIENTIFIQUE (C.N.R.S.)) 29 May 2014 (2014-05-29) | 1-8 |
| A | JP 2015-537101 A (ESPCI CENTRE NATIONAL DE LA RECHERCHE SCIENTIFIQUE) 24 December 2015 (2015-12-24) | 1-8 |
| A | EP 3336123 A1 (SABIC GLOBAL TECHNOLOGIES B.V.) 20 June 2018 (2018-06-20) | 1-8 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 September 2022** | **04 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 386 034 A1**

**INTERNATIONAL SEARCH REPORT**

International application No.

**PCT/JP2022/028973**

**C.    DOCUMENTS CONSIDERED TO BE RELEVANT**

| Category* | Citation of document, with indication, where appropriate, of the relevant passages | Relevant to claim No. |
|---|---|---|
| A | US 2019/0352477 A1 (SABIC GLOBAL TECHNOLOGIES B.V.) 21 November 2019 (2019-11-21) | 1-8 |
| A | HAYASHI, Mikihiro et al., Fair Investigation of Cross-Link Density Effects on the Bond-Exchange Properties for Trans-Esterification-Based Vitrimers with Identical Concentrations of Reactive Groups, Macromolecules, 2020, vol. 53, pp. 182-189, in particular, fig. 1, 4<br>in particular, fig. 1, 4 | 1-8 |
| A | XIA, Wang et al., Rheological and mechanical properties of poly(butylene terephthalate)-modified epoxy resins, JOURNAL OF MATERIALS SCIENCE, 1997, vol. 32, no. 1, pp. 111-114, in particular, pp. 112-114<br>in particular, pp. 112-114 | 1-8 |
| A | HAYASHI, Mikihiro et al., Synthesis of amorphous low Tg polyesters with multiple COOH side groups and their utilization for elastomeric vitrimers based on post-polymerization cross-linking, Polymer Chemistry, 2019, vol. 10, pp. 2047-2056, in particular, fig. 1, 4<br>in particular, fig. 1, 4 | 1-8 |

Form PCT/ISA/210 (second sheet) (January 2015)

**INTERNATIONAL SEARCH REPORT**
Information on patent family members

International application No.

**PCT/JP2022/028973**

| Patent document cited in search report | | | Publication date (day/month/year) | Patent family member(s) | | | Publication date (day/month/year) |
|---|---|---|---|---|---|---|---|
| JP | 2003-327846 | A | 19 November 2003 | (Family: none) | | | |
| JP | 2014-513192 | A | 29 May 2014 | US | 2014/0088223 | A1 | |
| | | | | WO | 2012/152859 | A1 | |
| | | | | FR | 2975101 | A | |
| | | | | CN | 103687888 | A | |
| JP | 2015-537101 | A | 24 December 2015 | US | 2015/0315344 | A1 | |
| | | | | WO | 2014/086974 | A1 | |
| | | | | EP | 2740755 | A1 | |
| | | | | CN | 104955879 | A | |
| EP | 3336123 | A1 | 20 June 2018 | (Family: none) | | | |
| US | 2019/0352477 | A1 | 21 November 2019 | EP | 3569645 | A1 | |
| | | | | CN | 110499005 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021131627 A

**Non-patent literature cited in the description**

- **YANWU ZHOU.** *Macromolecules,* 2017, vol. 50 (17), 6742-6751

- **JIANFAN QIU.** *Macromolecules,* 2021, vol. 54 (2), 703-712